# FASCICULE DE BREVET EUROPEEN

(11) **EP 3 437 203 B1**
(45) Date de publication et mention de la délivrance du brevet: **10.07.2019**
(21) Numéro de dépôt: 17714721.2
(22) Date de dépôt: 30.03.2017
(51) Int. Cl.: H04B 3/54

(54) **DISPOSITIF DE TRANSMISSION PAR COURANTS PORTEURS EN LIGNE DANS UN AÉRONEF**
VORRICHTUNG ZUR ÜBERTRAGUNG VON KOMMUNIKATION IN EINEM FLUGZEUG ÜBER EINE STROMLEITUNG
DEVICE FOR TRANSMISSION BY POWER-LINE COMMUNICATION IN AN AIRCRAFT

(30) Priorité: 31.03.2016 FR 1652808
(43) Date de publication de la demande: 06.02.2019
(73) Titulaire: Safran Electronics & Defense, 92100 Boulogne-Billancourt (FR)
(72) Inventeur: GUILLOT, François, 92100 BOULOGNE-BILLANCOURT (FR)
(74) Mandataire: Regimbeau
(86) Numéro de dépôt international: PCT/EP2017/057497
(87) Numéro de publication internationale: WO 2017/167854

(56) Documents cités:
- WO-A1-2014/044138
- FR-A1- 2 965 657
- US-A1- 2010 049 830

## Description

### DOMAINE DE L'INVENTION

La présente invention concerne le domaine de la transmission simultanée de puissance et de données par courants porteurs en ligne entre des équipements embarqués dans un aéronef.

### ETAT DE LA TECHNIQUE

Le terme Courants Porteurs en Ligne ou CPL réfère à une technologie permettant le transfert d'informations numériques en passant par une ligne de distribution d'énergie électrique. En particulier, la technologie CPL est couramment utilisée sur le réseau terrestre à basse tension (courant alternatif à 50 Hz ou 60 Hz).

Les courants porteurs étaient déjà utilisés sur le réseau terrestre pour des applications à bas débit industrielles ou de domotique.

Dans le cadre des applications terrestres, le principe des courants porteurs en ligne consiste à superposer au courant électrique d'alimentation classique, un signal à plus haute fréquence et de faible énergie. Ce deuxième signal se propage sur l'installation électrique et peut être reçu et décodé à distance. Ainsi le signal CPL est reçu par tout récepteur CPL qui se trouve sur le même réseau électrique.

La présente invention vise particulièrement les applications CPL à bord des aéronefs. Dans ces domaines, la masse et l'encombrement engendrés par le câblage à bord des aéronefs représentent un coût important qu'il convient de limiter autant que possible.

Généralement, les câbles de puissance fournissent la tension continue pour des équipements embarqués sont constitués d'une paire de fils de cuivre torsadés.

Ces câbles génèrent des couplages parasites entraînant des erreurs de transmission qui ne peuvent être corrigées qu'au dépend du débit des informations transmises.

Les équipements embarqués dans un aéronef sont soumis à des contraintes spécifiques en termes de fiabilité de l'information transmise et de sécurité auquel les systèmes de transmission par courants porteurs en ligne de l'art antérieur ne permettent pas de répondre.

Ils sont en outre dans des environnements physiques sévères qui peuvent entrainer des détériorations des câbles du fait des vibrations, des contraintes de températures, des contraintes de pression, etc...

Il a déjà été proposé par la demande de brevet FR2965657 d'utiliser des paires de conducteurs torsadées et croisées entre elles pour réaliser des communications par CPL entre deux équipements embarqués dans un aéronef. La demande de brevet US2010/0049830 A1, porte sur la communication CPL embarquée, en particulier les trains, et mentionne l'utilisation de deux paires de câbles torsadés. La demande de brevet WO 2014/044138 décrit une communication entre équipement faisant appel à des paires de câbles torsadés blindé), au moyen d'un protocole "multiple-input and multiple-output" (MIMO) basé sur Ethernet, et utilisés pour une communication bidirectionnelle où une paire est dédiée à chaque sens.

### EXPOSE DE L'INVENTION

Un but de l'invention est de fournir un système permettant de transmettre de la puissance et des signaux électriques simultanément entre des équipements embarqués dans un aéronef respectant les contraintes de fiabilité et de sécurité propres aux équipements embarqués dans un aéronef.

Un autre but encore de l'invention est de proposer une technique permettant le suivi de l'état des câbles.

La présente invention propose notamment un dispositif de transmission par courants porteurs en ligne entre deux équipements embarqués dans un aéronef, le dispositif de transmission par courants porteurs en ligne comportant un câble de transmission reliant les deux équipements, le câble de transmission étant configuré pour transmettre simultanément un courant d'alimentation et un signal de données.

L'utilisation de courants porteurs en ligne dans un aéronef permet de limiter drastiquement le nombre de connecteurs et de fils, ce qui permet de limiter sensiblement la masse et l'encombrement des équipements embarqués dans un aéronef.

Le câble de transmission comporte deux paires de conducteurs torsadées.

L'utilisation d'un câble de transmission comportant deux paires de conducteurs torsadées permet de générer des couplages capacitifs et inductifs qui assurent la qualité de la transmission des informations permettant ainsi l'utilisation de courants porteurs en ligne dans un aéronef.

Le dispositif comporte en outre un émetteur de données comportant un coupleur COFDM configuré pour moduler un signal par modulation de porteuses selon un mode COFDM, et un récepteur de donnée comportant un coupleur COFDM configuré pour démoduler un signal modulé par modulation de porteuses selon un mode COFDM.

L'émetteur de données est configuré pour émettre un signal de test par modulation de porteuses selon un mode COFDM.

Le récepteur de données est quant à lui configuré pour détecter des signaux correspondant aux signaux de test émis, et analyser les porteuses du signal détecté au regard du signal émis et en déduire l'état du câble de transmission.

Une telle configuration permet de faire passer un maximum de données en s'affranchissant des imperfections des câbles et en-dehors du spectre de bruit de la transmission de puissance.

Il permet de suivre l'état du câble de transmission.

L'invention est avantageusement complétée par les caractéristiques suivantes, prises individuellement ou en l'une quelconque de leurs combinaisons techniquement possibles :
- le signal de test est transmis dans une bande de fréquences supérieures à une bande de fréquence du signal de données ;
- l'émetteur est configuré pour transmettre simultanément des signaux de données avec des signaux de test ;
- le récepteur de données est configuré pour analyser la réponse en fréquence des signaux détectés pour détecter un défaut d'au moins une porteuse et en déduire une altération du câble de transmission ;
- le récepteur de données est configuré pour localiser un défaut le long du câble de transmission en fonction de la fréquence d'une porteuse altérée ;
- le récepteur de données est configuré pour surveiller dans le temps les amplitudes des différentes porteuses afin d'identifier des dégradations du câble de transmission ;
- l'émetteur de données et le récepteur de données comportent chacun un coupleur inductif entre le coupleur COFDM et la ligne de transmission filtrant les signaux de données en ne laissant passer que les signaux ayant une fréquence supérieure à la fréquence du courant d'alimentation,
   et l'émetteur de données et le récepteur de données comportent chacun un filtre passe bas filtrant le courant d'alimentation en ne laissant passer que les signaux ayant une puissance inférieure à la fréquence des signaux de données ;
- l'émetteur de données et le récepteur de données sont des émetteurs/récepteurs de données, le câble de transmission étant configuré pour une transmission de données bidirectionnelle, une des paires de conducteurs étant affectée à la transmission de données dans un sens, l'autre paire de conducteurs étant affectée à la transmission de données dans l'autre sens.
- le récepteur de donnée comporte un module de mesure du courant d'alimentation pour détecter des variations de la résistance série du câble de transmission ;
- l'émetteur de données est configuré pour allouer des créneaux temporels de transmission distincts pour les données critiques à la sécurité de l'aéronef et les données non critiques à la sécurité de l'aéronef.

### DESCRIPTION DES FIGURES

D'autres objectifs, caractéristiques et avantages sortiront de la description détaillée qui suit en référence aux dessins donnés à titre illustratif et non limitatif parmi lesquels :
- la figure 1 illustre un aéronef équipé d'un dispositif de transmission simultané de puissance et de données entre deux équipements embarqués dans l'aéronef selon l'invention ;
- la figure 2 est une vue schématique d'un dispositif de transmission selon l'invention ;
- la figure 3 représente un câble d'un dispositif de transmission d'un dispositif de transmission selon l'invention ;
- la figure 4 représente schématiquement le couplage des données dans un dispositif de transmission selon l'invention ;
- la figure 5 représente le spectre du signal de puissance et du signal de données dans un mode de réalisation d'un dispositif de transmission selon l'invention ;
- la figure 6 représente les porteuses de synchronisation dans le signal de données dans un mode de réalisation d'un dispositif de transmission selon l'invention ;
- la figure 7 représente un exemple de motif de trame de transmission dans un mode de réalisation d'un dispositif de transmission selon l'invention.

### DESCRIPTION DETAILLEE DE L'INVENTION

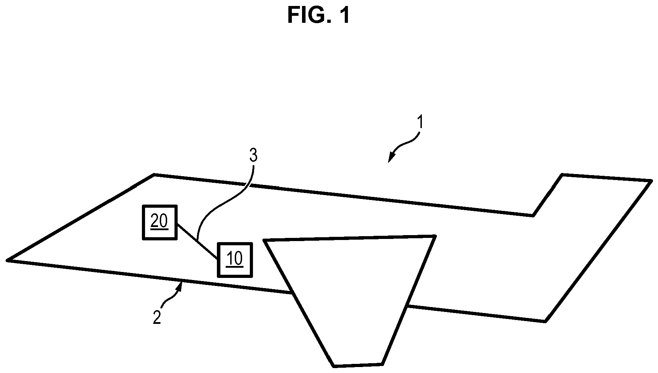

La figure 1 illustre un aéronef 1 équipé d'un dispositif de transmission 3 par courants porteurs en ligne entre au moins deux équipements 10 et 20 embarqués dans l'aéronef 1.

L'un des équipements 10 est alimenté par une source de puissance 300 de courant continu à haute tension, l'autre équipement 20 est alimenté par la puissance électrique acheminée par le câble de transmission 3.

L'un des équipements 10 embarqués est par exemple le calculateur central de l'aéronef 1 et les autres 20 des périphériques de navigation, par exemple des instruments de pilotage (horizon artificiel, anémomètre, altimètre, variomètre, etc.), de navigation (compas, ILS, VOR, GPS, etc.), de gestion des groupes propulseurs (tachymètre, température et pression, etc.), de gestion des télécommunications (radio, système d'intercommunication de bord, etc.), de gestion des servitudes (consommation de carburant, tension et intensité électrique, etc.) ou d'autres instruments spécialisés.

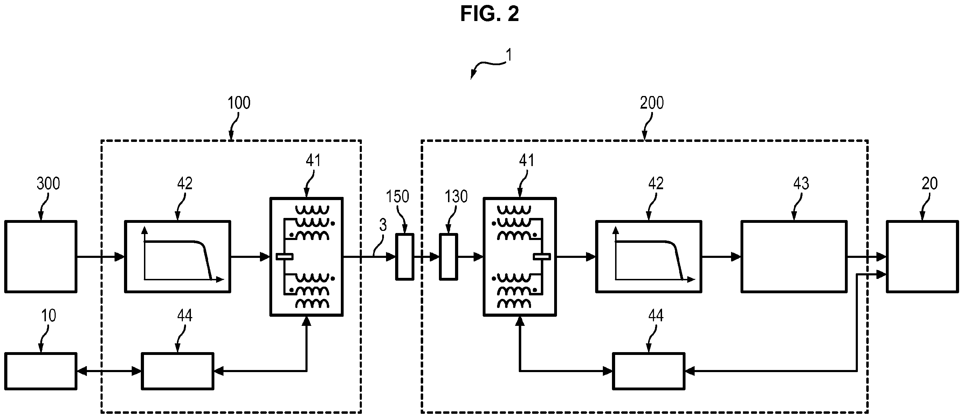

En référence à la figure 2, le dispositif de transmission 3 par courants porteurs en ligne comporte un émetteur de données 100 destiné à être connecté à l'un des équipements 10 et un récepteur de données 200 destiné à être connecté à l'autre équipement 20.

Le dispositif de transmission 3 simultané de puissance et de données comporte un câble de transmission 3, reliant le récepteur de données 200 à l'émetteur de données 100 et à la source de puissance 300.

L'émetteur 100 et le récepteur 200 peuvent en particulier être des émetteurs/récepteurs configurés pour la transmission de données bidirectionnelles.

Le câble 3 est destiné à transporter du courant continu ou alternatif à haute tension (HVAC ou HVDCDC), typiquement 50 ou 60 Hz et 540 V, et des données à plus haute fréquence, typiquement 3 à 300 MHz et de plus faible énergie typiquement 1 à 10 dBm).

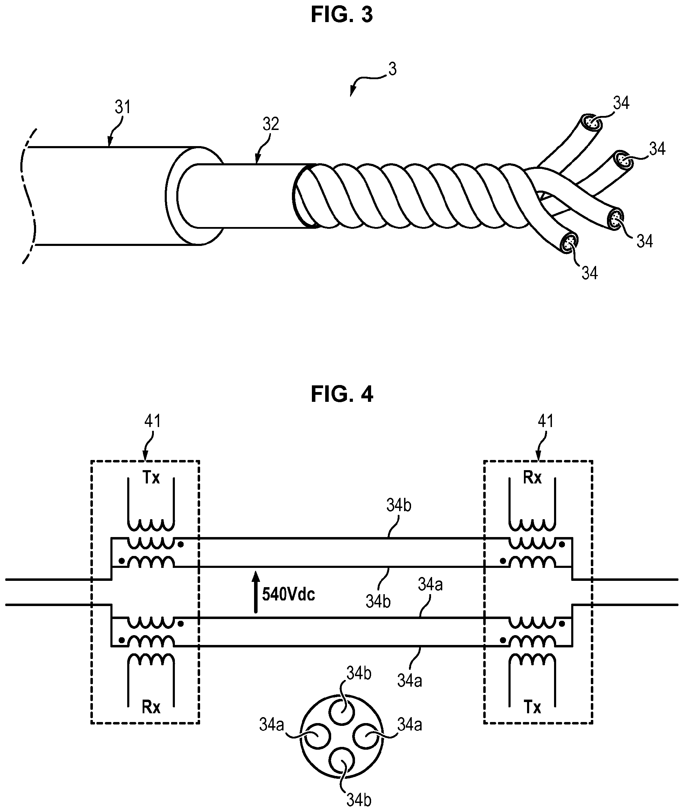

En référence à la figure 3, le câble de transmission 3 est un câble étoile (ou 'star quad') qui comporte deux paires de conducteurs 34 torsadées.

Chaque conducteur 34 est entouré d'une couche isolante.

Les deux paires de conducteurs 34 sont disposés au sommet d'un carré, les deux conducteurs d'une même paire étant disposés selon une diagonale du carré.

Le positionnement relatif des conducteurs 34 formant le câble 3 permet de générer des couplages capacitifs et inductifs qui assurent la qualité de la transmission des informations.

Ces couplages doivent être réalisés de façon d'autant plus précise que l'on souhaite faire passer un grand débit d'informations.

Tout défaut de symétrie de le câble quatre fils en étoile se traduit par des couplages parasites entraînant des erreurs de transmission qui ne peuvent être corrigées qu'au dépend du débit des informations transmises.

Les conducteurs 34 sont par exemple fixés à un organe porteur de forme cylindrique par de la colle de façon à maintenir leurs positions respectives. Lors de la réalisation de la quarte étoile, les quatre conducteurs 34 sont torsadés tout en étant guidés pour les maintenir de façon précise au sommet d'un carré.

Les deux paires de conducteurs 34 torsadées sont entourées d'un blindage 31 métallique et éventuellement d'une gaine 32 en papier ou en polyester par exemple pour le maintien mécanique.

Le blindage 31 peut en particulier être relié à la structure métallique 2 de l'aéronef 1, ce qui permet de protéger le câble 3 de la foudre.

Les 2 paires torsadées 34a et 34b sont caractérisées par une impédance itérative et une faible diaphonie entre elles.

En référence à la figure 4, dans le cas d'une transmission bidirectionnelle, deux des conducteurs 34a sont connectés d'une part à l'émetteur du premier équipement et d'autre part au récepteur du second équipement, et deux des conducteurs 34b sont connectés d'une part au récepteur du premier équipement et d'autre part à l'émetteur du second équipement.

Le récepteur 200 et l'émetteur 100 sont tous deux agencés pour échanger des signaux codés multiplexés par division orthogonale de fréquences (ou COFDM).

A cet effet, ils comportent chacun un coupleur COFDM 44.

Les données sont transmises sous forme de signaux codés multiplexés par division orthogonale de fréquences (dits plus couramment signaux COFDM de l'anglais « Coded Orthogonal Frequency Division Multiplexing »). Ceci permet de faire passer un maximum de données dans les câbles en s'affranchissant des imperfections des câbles.

Ce procédé de multiplexage est connu en lui-même et ne sera pas détaillé ici : on rappellera simplement que ce procédé consiste à diviser le signal à transmettre en sous-ensembles, ayant une faible bande passante, qui sont utilisés chacun pour moduler un nombre relativement important de porteuses orthogonales.

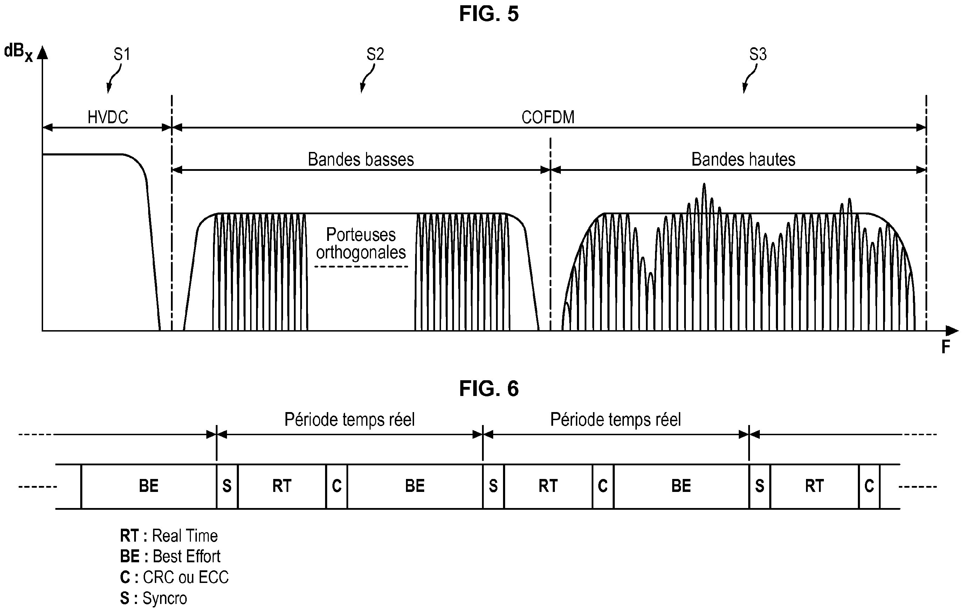

Comme illustré sur la figure 5, le fait de multiplexer les données par division orthogonale de fréquences permet que la transmission des données S2 soit en dehors du spectre de bruit de la transmission de puissance S1.

L'émetteur de données 100 et le récepteur de données 200 comportent chacun un coupleur inductif 41.

Le coupleur inductif 41 assure le filtrage des signaux de données en mode commun. Il agit comme un filtre passe-haut ne laissant passer que les signaux ayant une fréquence supérieure à la fréquence du courant d'alimentation entre le coupleur COFDM 44 et la ligne de transmission 3. Les coupleurs inductifs 41 permettent de limiter le bruit induit par le courant d'alimentation sur les signaux de données.

L'émetteur de données 100 et le récepteur de données 200 comportent chacun un filtre passe bas 42 filtrant le courant d'alimentation. La source de puissance 300 est connectée au câble 3 par l'intermédiaire d'un filtre passe bas 42 et l'équipement 20 est alimenté en puissance par l'intermédiaire d'un autre filtre passe bas 42. Les filtres passe bas 42 assurent le filtrage du courant d'alimentation en ne laissant passer que les signaux ayant une puissance inférieure à la fréquence des signaux de données. Les filtres passe bas 42 permettent de limiter le bruit induit par le courant d'alimentation sur les signaux de données.

Le récepteur de données 200 peut en outre comporter un convertisseur DC/AC pour transformer le courant HVDC transmis sur la câble 3 en un courant AC pour alimenter l'équipement 20.

Le dispositif de transmission de puissance et de données peut en outre comporter un module de surveillance d'un état d'un câble de transmission 3.

L'émetteur 100 est alors configuré pour émettre un signal de test par modulation de porteuses selon un mode COFDM, et le récepteur 200 est configuré pour détecter en aval du transmetteur des signaux correspondant aux signaux de test émis, et analyser les porteuses du signal détecté au regard du signal émis et en déduire l'état du câble.

En effet, une modification des propriétés du câble 3 provoque une altération des porteuses des signaux. La surveillance des porteuses permet donc de déduire un état du câble de transmission.

La figure 5 représente le signal émis par l'émetteur 100. Le spectre du signal comprend :
- une première portion qui correspond au signal de puissance S1,
- une deuxième portion qui se trouve dans une bande de fréquences moyennes et qui est un signal de données S2,
- une troisième portion qui se trouve dans une bande de fréquences relativement hautes et qui forme le signal de test S3.

L'impédance caractéristique du câble est connu jusqu'aux fréquences les plus élevées de la transmission de données par porteuses COFDM.

En cas de dégradation du câble, il se produit donc une perturbation de l'aspect itératif de l'impédance caractéristique de celui-ci. La réponse du câble 3 ne sera plus celle d'un câble à impédance itérative et présentera, vu de l'émetteur, une impédance complexe qui se traduit par des phénomènes de résonance générateurs de discontinuité dans la réponse fréquentielle du câble. L'étude de la réponse en fréquence permet de détecter une altération des caractéristiques physiques du câble 3. Une modification locale de la géométrie du câble 3 introduit une résonance série diminuant fortement l'impédance pour une fréquence particulière correspondant à la fréquence de résonance (il en résulte une atténuation de la porteuse à cette fréquence) ou une résonance parallèle engendrant une surtension à la fréquence de résonance.

On voit sur la figure 5 que certaines porteuses du signal de test S3 sont atténuées tandis que d'autres porteuses du signal de test S3 sont amplifiées. La localisation du défaut le long du câble dépend de la fréquence de la porteuse altérée : plus le défaut est éloigné de l'émetteur et plus la porteuse altérée a une fréquence basse.

Les perturbations induites auront un impact dépendant de la fréquence d'excitation et de la distance du défaut depuis le point de départ des porteuses.

Le récepteur 200 est donc configuré pour étudier la réponse en fréquence des signaux détectés pour détecter un défaut d'au moins une porteuse et en déduire une altération du câble.

L'émetteur 100 peut en particulier être configuré pour transmettre simultanément des signaux de données avec les signaux de test, les signaux de test étant transmis dans une bande de fréquences supérieures à une bande de fréquences des signaux de données.

En effet, l'ajout de bandes hautes fréquences dans le signal test permet d'augmenter la sensibilité du système.

La surveillance dans le temps des amplitudes des différentes porteuses permet d'identifier les dégradations progressives du câblage, avant la perte de la fonction de communication.

Le dispositif de transmission de puissance et de données peut en outre comporter un module de surveillance 130 de l'apparition d'arcs électriques internes au câble. Les décharges partielles (ou prémisses d'arcs électriques) entre deux conducteurs du câble sont détectées de la même manière que les autres défauts par l'occurrence de variations d'impédance locales sur la ligne. Ces variations génèrent des impédances complexes qui sont aussi mises en évidence par modulation d'amplitude de certaines porteuses du profil de multiplexage COFDM.

Le dispositif de transmission 3 peut en outre comporter un module de mesure 150 du courant d'alimentation pour détecter des variations de la résistance série du câble 3. En effet, une variation de la résistance série du câble indique une défaillance sur la ligne de transmission.

En référence à la figure 6, pour améliorer la fiabilité de la transmission des données critiques pour la sécurité, des créneaux temporels de transmission sont alloués aux flux de données critiques pour la sécurité.

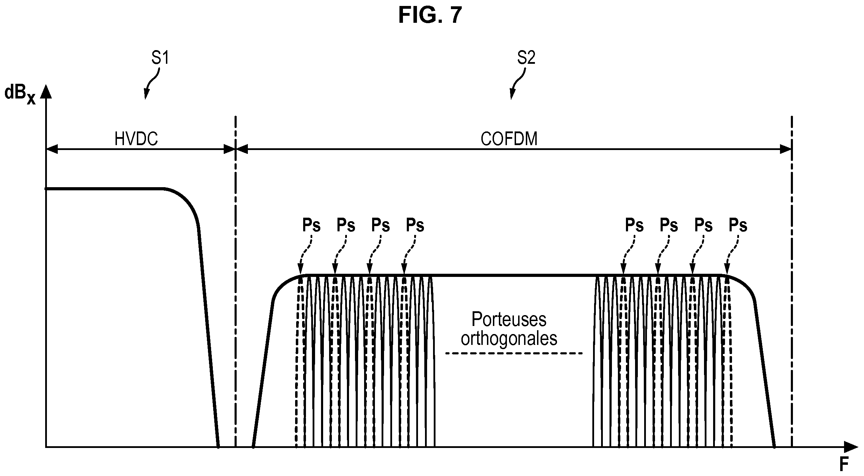

En référence à la figure 7, des porteuses de synchronisation Ps sont dédiées au pilotage en phase de la base de temps du récepteur 100.

Le séquenceur interne du coupleur 41 de l'émetteur 100 (qui sera appelé coupleur maitre par la suite) génère un motif de trame de transmission allouant des créneaux temporels de transmission.

Le séquenceur interne du coupleur 41 maitre alloue des créneaux temporels de transmission distincts pour les données critiques et les données non critiques.

Le séquenceur interne du coupleur 41 du récepteur (qui sera appelé coupleur distant par la suite) génère un motif de trame identique à celui émis par le coupleur maître.

Les motifs de synchronisation émis périodiquement peuvent être affectés d'un contrôle de redondance cyclique ou CRC (Cyclic Redundancy Check) permettant de rejeter les données fausses avec une probabilité d'occurrence > 1.10⁻⁹ FH.

Le CRC permet de détecter les erreurs de transmission ou de transfert par ajout, combinaison et comparaison de données redondantes, obtenues grâce à une procédure de hachage.

La transformation de Fourier rapide ou FFT du message permet de générer une composante moyenne dépendante de l'écart de phase entre l'oscillateur du coupleur maitre qui est alors l'oscillateur de référence et la base de temps du coupleur distant.

Les porteuses modulées en phase, après FFT, délivrent une composante moyenne nulle, donc sans effet sur la commande de l'oscillateur de la base de temps pilotée.

La détection d'un motif de synchronisation force la synchronisation de la trame locale du coupleur distant.

Cette trame est utilisée pour le transport des données depuis le coupleur distant vers le coupleur maitre avec rigoureusement les mêmes durées de motifs transmis.

Chaque message transmis peut en outre être affecté d'un CRC permettant de détecter les messages erronés.

La trame émise depuis le coupleur maitre (et celle du coupleur distant) est découpée en séquences comportant les éléments suivants :
- Motif de synchronisation ;
- Données critiques en temps réel ;
- Motif de contrôle CRC calculé à partir des données critiques ;
- Données non critiques en Best Effort (la taille est dimensionnée par les motifs précédents et la périodicité temps réel).

La séquence allouée aux données critiques en temps réel est dimensionnée pour permettre l'hébergement de l'intégralité des données temps réel.

La séquence allouée aux données non critiques en Best Effort est dimensionnée en fonction du temps restant après allocation de temps aux données critiques.

Les données Best Effort sont mémorisées dans un registre tampon (FIFO) pour supporter les faiblesses temporaires de possibilité de bande passante disponible sur le canal de transmission des données Best Effort.

## Revendications

1. Dispositif de transmission par courants porteurs en ligne (1) entre deux équipements (10, 20) embarqués dans un aéronef (1), le dispositif de transmission par courants porteurs en ligne (1) comportant un câble de transmission (3) reliant les deux équipements (10, 20), le câble de transmission (3) étant configuré pour transmettre simultanément un courant d'alimentation et un signal de données et comportant deux paires de conducteurs (34, 34a, 34b) torsadées, **caractérisé en ce que** le dispositif comporte un émetteur de données (100) comportant un coupleur COFDM (44) configuré pour moduler un signal par modulation de porteuses selon un mode COFDM, et un récepteur de donnée (200) comportant un coupleur COFDM (44) configuré pour démoduler un signal modulé par modulation de porteuses selon un mode COFDM, et **en ce que**
- l'émetteur de données (100) est configuré pour émettre un signal de test par modulation de porteuses selon un mode COFDM,
- le récepteur de données (200) est configuré pour détecter des signaux correspondant aux signaux de test émis, et analyser les porteuses du signal détecté au regard du signal émis et en déduire l'état du câble de transmission (3).

2. Dispositif de transmission par courants porteurs en ligne (1) selon la revendication 1, dans lequel le signal de test est transmis dans une bande de fréquences supérieures à une bande de fréquence du signal de données.

3. Dispositif de transmission par courants porteurs en ligne (1) selon la revendication précédente, dans lequel l'émetteur (100) est configuré pour transmettre simultanément des signaux de données avec des signaux de test.

4. Dispositif de transmission par courants porteurs en ligne (1) selon l'une des revendications précédentes, dans lequel le récepteur de données (200) est configuré pour analyser la réponse en fréquence des signaux détectés pour détecter un défaut d'au moins une porteuse et en déduire une altération du câble de transmission (3).

5. Dispositif de transmission par courants porteurs en ligne (1) selon la revendication précédente, dans lequel le récepteur de données (200) est configuré pour localiser un défaut le long du câble de transmission en fonction de la fréquence d'une porteuse altérée.

6. Dispositif de transmission par courants porteurs en ligne (1) selon l'une des revendications précédentes, dans lequel le récepteur de données (200) est configuré pour surveiller dans le temps les amplitudes des différentes porteuses afin d'identifier des dégradations du câble de transmission.

7. Dispositif de transmission par courants porteurs en ligne (1) selon l'une des revendications précédentes, dans lequel l'émetteur de données (100) et le récepteur de données (200) comportent chacun un coupleur inductif (41) entre le coupleur COFDM (44) et la ligne de transmission (3) filtrant les signaux de données en ne laissant passer que les signaux ayant une fréquence supérieure à la fréquence du courant d'alimentation, et dans lequel l'émetteur de données (100) et le récepteur de données (200) comportent chacun un filtre passe bas (42) filtrant le courant d'alimentation en ne laissant passer que les signaux ayant une puissance inférieure à la fréquence des signaux de données.

8. Dispositif de transmission par courants porteurs en ligne (1) selon l'une des revendications précédentes, dans lequel l'émetteur de données (100) et le récepteur de donnée (200) sont des émetteurs/récepteurs de données, le câble de transmission (3) étant configuré pour une transmission de données bidirectionnelle, une des paires de conducteurs (34a) étant affectée à la transmission de données dans un sens, l'autre paire de conducteurs (34a) étant affectée à la transmission de données dans l'autre sens.

9. Dispositif de transmission par courants porteurs en ligne (1) selon l'une des revendications précédentes, dans lequel le récepteur de donnée (200) comporte un module (130) de mesure du courant d'alimentation pour détecter des variations de la résistance série du câble de transmission (3).

10. Dispositif de transmission par courants porteurs en ligne (1) selon l'une des revendications précédentes, dans lequel l'émetteur de données (100) est configuré pour allouer des créneaux temporels de transmission distincts pour les données critiques à la sécurité de l'aéronef et les données non critiques à la sécurité de l'aéronef.

## Patentansprüche

1. Vorrichtung zur Übertragung durch PowerLAN (1) zwischen zwei On-Board-Ausrüstungen (10, 20) in einem Flugzeug (1), wobei die Vorrichtung zur Übertragung durch PowerLAN (1) ein Übertragungskabel (3) aufweist, das die zwei Ausrüstungen (10, 20) verbindet, wobei das Übertragungskabel (3) konfiguriert ist, um gleichzeitig einen Versorgungsstrom und ein Datensignal zu übertragen und zwei verdrillte Leiterpaare (34, 34a, 34b) aufweist, **dadurch gekennzeichnet, dass** die Vorrichtung einen Datensender (100) aufweist, aufweisend einen COFDM-Koppler (44), der konfiguriert ist, um ein Signal durch Trägermodulation gemäß einem COFDM-Modus zu modulieren, und einen Datenempfänger (200), der einen COFDM-Koppler (44) aufweist, der konfiguriert ist, um ein durch Trägermodulation gemäß einem COFDM-Modus moduliertes Signal zu demodulieren, und dass
- der Datensender (100) konfiguriert ist, um ein Testsignal durch Trägermodulation gemäß einem COFDM-Modus zu senden,
- der Datenempfänger (200) konfiguriert ist, um Signale zu ermitteln, die den gesendeten Testsignalen entsprechen, und die Träger des ermittelten Signals im Hinblick auf das gesendete Signal zu analysieren und daraus den Zustand des Übertragungskabels (3) abzuleiten.

2. Vorrichtung zur Übertragung durch PowerLAN (1) nach Anspruch 1, wobei das Testsignal in einem Frequenzband übertragen wird, das höher als ein Frequenzband des Datensignals ist.

3. Vorrichtung zur Übertragung durch PowerLAN (1) nach vorangehendem Anspruch, wobei der Sender (100) konfiguriert ist, um gleichzeitig Datensignale mit Testsignalen zu übertragen.

4. Vorrichtung zur Übertragung durch PowerLAN (1) nach einem der vorangehenden Ansprüche, wobei der Datenempfänger (200) konfiguriert ist, um die Frequenzantwort der ermittelten Signale zu analysieren, um einen Fehler mindestens eines Trägers zu ermitteln und um daraus eine Beeinträchtigung des Übertragungskabels (3) abzuleiten.

5. Vorrichtung zur Übertragung durch PowerLAN (1) nach vorangehendem Anspruch, wobei der Datenempfänger (200) konfiguriert ist, um einen Fehler entlang des Übertragungskabels in Abhängigkeit von der Frequenz eines beeinträchtigten Trägers zu lokalisieren.

6. Vorrichtung zur Übertragung durch PowerLAN (1) nach einem der vorangehenden Ansprüche, wobei der Datenempfänger (200) konfiguriert ist, um die Amplituden der verschiedenen Träger zeitlich zu überwachen, um Verschlechterungen des Übertragungskabels zu identifizieren.

7. Vorrichtung zur Übertragung durch PowerLAN (1) nach einem der vorangehenden Ansprüche, wobei der Datensender (100) und der Datenempfänger (200) jeweils einen induktiven Koppler (41) zwischen dem COFDM-Koppler (44) und der Übertragungsleitung (3) aufweisen, der die Datensignale filtert, indem er nur die Signale passieren lässt, die eine Frequenz über der Frequenz des Versorgungsstroms haben, und wobei der Datensender (100) und der Datenempfänger (200) jeweils einen Tiefpassfilter (42) aufweisen, der den Versorgungsstrom filtert, indem er nur die Signale passieren lässt, die eine Leistung unterhalb der Frequenz der Datensignale haben.

8. Vorrichtung zur Übertragung durch PowerLAN (1) nach einem der vorangehenden Ansprüche, wobei der Datensender (100) und der Datenempfänger (200) Datensender/-empfänger sind, wobei das Übertragungskabel (3) für eine zweidirektionalen Datenübertragung konfiguriert ist, wobei eines der Leiterpaare (34a) der Datenübertragung in eine Richtung zugewiesen ist, wobei das andere Leiterpaar (34a) der Datenübertragung in die andere Richtung zugewiesen ist.

9. Vorrichtung zur Übertragung durch PowerLAN (1) nach einem der vorangehenden Ansprüche, wobei der Datenempfänger (200) ein Messmodul (130) des Versorgungsstroms aufweist, um Änderungen des Serienwiderstands des Übertragungskabels (3) zu ermitteln.

10. Vorrichtung zur Übertragung durch PowerLAN (1) nach einem der vorangehenden Ansprüche, wobei der Datensender (100) konfiguriert ist, um unterschiedliche zeitliche Übertragungsschlitze für die für die Sicherheit des Flugzeugs kritischen Daten und für die für die Sicherheit des Flugzeugs nicht kritischen Daten zuzuweisen.

## Claims

1. A device for transmission by power line communication (1) between two items of equipment (10, 20) on-board an aircraft (1), the device for transmission by power line communication (1) including a transmission cable (3) connecting the two items of equipment (10, 20), the transmission cable (3) being configured to simultaneously transmit a supply current and a data signal and including two twisted pairs of conductors (34, 34a, 34b), **characterized in that** the device includes a data transmitter (100) including a COFDM coupler (44) configured to modulate a signal by carrier modulation in a COFDM mode, and a data receiver (200) including a COFDM coupler (44) configured to demodulate a modulated signal by carrier modulation in a COFDM mode, and **in that**
- the data transmitter (100) is configured to transmit a test signal by carrier modulation in a COFDM mode,
- the data receiver (200) is configured to detect signals corresponding to the transmitted test signals, and analyze the carriers of the detected signal in regard to the transmitted signal and deduce therefrom the state of the transmission cable (3).

2. The device for transmission by power line communication (1) according to claim 1, wherein the test signal is transmitted in a frequency band higher than a frequency band of the data signal.

3. The device for transmission by power line communication (1) according to the preceding claim, wherein the transmitter (100) is configured to simultaneously transmit data signals with test signals.

4. The device for transmission by power line communication (1) according to any of the preceding claims, wherein the data receiver (200) is configured to analyze the frequency response of the detected signals to detect a fault of at least one carrier and deduce therefrom an alteration of the transmission cable (3).

5. The device for transmission by power line communication (1) according to the preceding claim, wherein the data receiver (200) is configured to locate a fault along the transmission cable according to the frequency of an altered carrier.

6. The device for transmission by power line communication (1) according to any of the preceding claims, wherein the data receiver (200) is configured to monitor over time the amplitudes of the various carriers in order to identify degradations of the transmission cable.

7. The device for transmission by power line communication (1) according to any of the preceding claims, wherein the data transmitter (100) and the data receiver (200) each include an inductive coupler (41) between the COFDM coupler (44) and the transmission line (3) filtering the data signals by passing only the signals with a frequency higher than the frequency of the supply current, and wherein the data transmitter (100) and the data receiver (200) each include a lowpass filter (42) filtering the supply current by passing only the signals with a power lower than the frequency of the data signals.

8. The device for transmission by power line communication (1) according to any of the preceding claims, wherein the data transmitter (100) and the data receiver (200) are data transmitters/receivers, the transmission cable (3) being configured for a bidirectional transmission of data, one of the pairs of conductors (34a) being assigned to the transmission of data in one direction, the other pair of conductors (34a) being assigned to the transmission of data in the other direction.

9. The device for transmission by power line communication (1) according to any of the preceding claims, wherein the data receiver (200) includes a module (130) for measuring the supply current to detect variations in the series resistance of the transmission cable (3).

10. The device for transmission by power line communication (1) according to any of the preceding claims, wherein the data transmitter (100) is configured to allocate separate transmission time slots for the data critical to the safety of the aircraft and the data non-critical to the safety of the aircraft.
